Europäisches Patentamt

European Patent Office

Office européen des brevets

(19)

(11) Numéro de publication: **0 265 316**
**B1**

(12) **FASCICULE DE BREVET EUROPEEN**

(45) Date de publication du fascicule du brevet:
**30.05.90**

(21) Numéro de dépôt: **87402233.8**

(22) Date de dépôt: **07.10.87**

(51) Int. Cl.⁵: **F16B 1/00**, F16H 25/24
// B60N2/02

(54) **Système de verrouillage d'un dispositif linéaire de réglage rapide et de blocage d'une pièce mobile par rapport à une pièce fixe.**

(30) Priorité: **13.10.86 FR 8614179**

(43) Date de publication de la demande:
**27.04.88 Bulletin 88/17**

(45) Mention de la délivrance du brevet:
**30.05.90 Bulletin 90/22**

(84) Etats contractants désignés:
**DE ES GB IT SE**

(56) Documents cités:
**DE-A- 2 943 694
DE-B- 1 185 441
US-A- 2 524 481
US-A- 2 933 939
US-A- 3 043 552**

(73) Titulaire: **ROCKWELL-CIM, 6, rue Barbès Boite
Postale 70, F-92302 Levallois Cedex(FR)**

(72) Inventeur: **Chevance, Claude, 12 Bis, rue Bergonié,
F-91600 Savigny-sur-Orge(FR)**

(74) Mandataire: **Martin, Jean-Paul et al, c/o CABINET
LAVOIX 2, Place d'Estienne d'Orves, F-75441 Paris
Cedex 09(FR)**

ACTORUM AG

## Description

La présente invention a pour objet un système de verrouillage d'un dispositif linéaire de réglage rapide et de blocage d'une pièce mobile par rapport à une pièce fixe, tel que défini dans le préambule de la revendication 1.

La demande de brevet au nom de la Demanderesse, déposée le même jour que la présente demande et intitulée "Dispositif linéaire de réglage rapide et de blocage d'une pièce mobile par rapport à une pièce fixe, applicable notamment au réglage de guide de table de machine à bois", décrit diverses formes de réalisation d'un tel dispositif.

Ce dispositif, constituant un vérin mécanique, est susceptible de recevoir des applications extrêmement nombreuses, par exemple pour régler le guide d'une table de machine à bois, ou encore pour le réglage des positions des éléments d'un siège, notamment dans un véhicule automobile, un bateau ou un avion.

L'invention a pour but de réaliser un système de verrouillage avantageux de l'élément rotatif (écrou) du couple vis-écrou du dispositif de réglage rapide décrit dans la demande de brevet précitée.

Le système visé par l'invention est destiné à assurer le verrouillage d'un dispositif linéaire de réglage rapide et de blocage d'une pièce mobile par rapport à une pièce fixe, ce dispositif linéaire comprenant au moins un couple d'éléments vis-écrou portés par un boîtier coopérant avec les deux pièces fixe et mobile et dont l'angle de vis est suffisamment élevé pour que le rendement de la translation vers la rotation soit légèrement positif, ledit système étant agencé pour pouvoir verrouiller l'élément rotatif du couple vix-écrou après réglage de la position de la pièce mobile.

Suivant l'invention, les moyens de verrouillage de l'écrou comprennent: une portion de cylindre verrouilleur pourvue de filets intérieurs conjugués de filets extérieurs de l'écrou, et dans ces deux séries de filets sont réalisées des cannelures complémentaires parallèles à l'axe de la vis, la portion de cylindre verrouilleur étant sollicitée par un organe élastique contre une butée solidaire du boîtier et en prise avec les cannelures de l'écrou en bloquant celui-ci en rotation, le dispositif étant alors au repos, un filetage étant formés dans le boîtier et similaire aux filets extérieurs de l'écrou, de manière que l'écrou puisse tourner dans le filetage du boîtier en se déplaçant axialement dans celui-ci et dans les filets du verrouilleur, lorsque le cylindre verrouilleur n'est par en prise avec l'écrou, et des moyens de commande manuelle permettant de déplacer axialement le cylindre verrouilleur pour le dégager des cannelures de l'écrou et déverouiller ce dernier en rotation afin de lui permettre de tourner dans le filetage du boîtier.

La réalisation et la manœuvre de ce système de verrouillage sont particulièrement simples et aisées.

D'autres particularités et avantages de l'invention apparaîtront au cours de la description qui va suivre, faite en référence aux dessins annexés qui en illustrent à titre d'exemple non limitatif une forme de réalisation:

– les Figures 1 à 4 sont des vues simplifiées mi-coupe axiale, mi-élévation de trois formes de réalisation du dispositif linéaire de réglage auquel peut être incorporé le système de verrouillage selon l'invention;

– la Figure 5 est une vue en coupe axiale d'un dispositif de réglage rapide du type de celui de la Figure 2, équipé d'un mode de réalisation du système de verrouillage selon l'invention;

– la Figure 6 est une vue en coupe longitudinale suivant 6–6 de la Figure 5;

– la Figure 7 est une vue en élévation en bout du dispositif suivant la direction de la flèche F de la Figure 5;

– la Figure 8 est une vue en coupe transversale suivant 8–8 de la Figure 5;

– la Figure 9 est une vue en perspective d'une portion de cylindre verrouilleur permettant le blocage en rotation de la noix du dispositif de réglage des Figures 5 à 8:

– la Figure 10 est une vue en coupe transversale suivant 10–10 de la Figure 5;

– les Figures 11 et 12 sont des vues respectivement de dessus en plan et en élévation longitudinale illustrant l'implantation du dispositif de réglage des Figures 5 à 10 et de son système de verrouillage selon l'invention sur un siège de véhicule pour le réglage longitudinal de l'assise de ce siège;

– la Figure 13 est une vue en élévation en bout, avec coupe partielle, du dispositif des Figures 11 et 12;

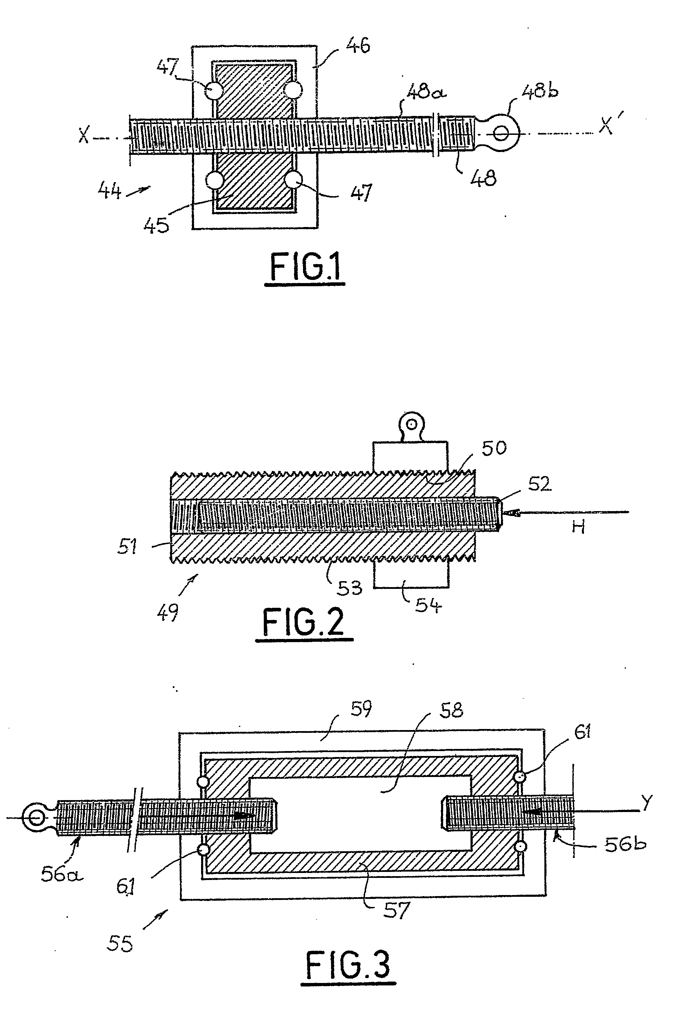

On a représente à la Figure 1 un premier mode de réalisation du dispositif linéaire de réglage rapide d'une pièce mobile par rapport à une pièce fixe non représentées. Ce dispositif comprend une vis 48 qui traverse un écrou 45 disposé dans un logement intérieur d'un boîtier 46 avec interposition de chemins de billes 47 de roulement.

Le perçage de l'écrou 45 est pourvu d'un taraudage en prise avec le filetage 48a de la vis 48 et l'écrou 45, et bloqué en translation axiale à l'intérieur du boîtier 46. Il est donc mobile uniquement en rotation autour de l'axe X–X' de la vis 48, laquelle est mobile en translation et fixe en rotation. La vis 48 comporte un oeillet terminal 48b permettant de la solidariser avec la pièce mobile à régler, tandis que le boîtier 46 est solidaire de la pièce fixe. L'angle de la vis 48, c'est-à-dire l'angle d'inclinaison de ses filets sur une perpendiculaire à l'axe X–X' (également appelé angle d'hélice ou angle de filet) est choisi de manière à être suffisamment élevé pour que le rendement de la translation de la vis 48 vers la rotation de l'écrou 45 soit légèrement positif. Le dispositif peut être muni d'un système de verrouillage non représenté, permettant de bloquer l'écrou 45 en rotation et par conséquent la vis 48 en translation, lorsque celle-ci est dans la position correspondant au réglage voulu pour la pièce mobile. Une poussée axiale sur la vis 48 dans l'un ou l'autre sens se traduit, dans ce dispositif, uniquement par une rotation de l'écrou 45 dans son boîtier 46.

Dans le second mode de réalisation du dispositif illustré à la Figure 2, le dispositif 49 comprend une vis 52 mobile en translation et fixe en rotation, un écrou 51 présentant un taraudage coopérant avec le filetage de la vis ainsi qu'un filetage extérieur 53 dont le pas est contraire à celui du taraudage intérieur traversé par la vis 52. L'écrou 51 traverse une noix 54 pourvue d'un taraudage 50 et apte à être solidarisée avec la pièce fixe (non représentée) à régler, tandis que la vis 52 est solidaire de la pièce mobile. Ainsi l'écrou 51 est mobile à la fois en translation et en rotation lorsqu'un effort axial H est exercé sur la vis 52 par la pièce mobile. La noix 54 est susceptible de porter un système de verrouillage (non représenté) de l'écrou 51. Comme dans la réalisation précédente, l'angle de la vis 52 est choisi de manière à être suffisamment élevé pour que le rendement de la translation vers la rotation soit légèrement positif.

La Figure 3 illustre un troisième mode de réalisation du dispositif de réglage, dans lequel celui-ci comporte un écrou 57 présentant un logement intérieur 58 et dans les extrémités duquel sont agencés deux taraudages de pas contraires qui coopèrent chacun avec une vis 56a, 56b, ces deux vis ayant des pas inverses. L'écrou 57 est monté rotatif dans un boîtier 59 de support également traversé par les vis 56a, 56b. L'angle de celles-ci étant choisi pour que le rendement de la translation vers la rotation soit légèrement positif, et l'une des vis 56a, 56b étant solidaire de la pièce mobile (non représentée) à régler, tandis que l'autre vis est solidaire de la pièce fixe, l'écrou 57 est déplaçable à la fois en rotation et en translation sous l'action d'un effort axial tel que Y, excercé sur la vis solidaire de la pièce mobile. Bien entendu, le boîtier 59 accompagne le mouvement en translation de l'écrou 57. Le boîtier 59 peut être muni de moyens de verrouillage (non représentés) de l'écrou 57, et par conséquent de blocage de la vis reliée à la pièce mobile.

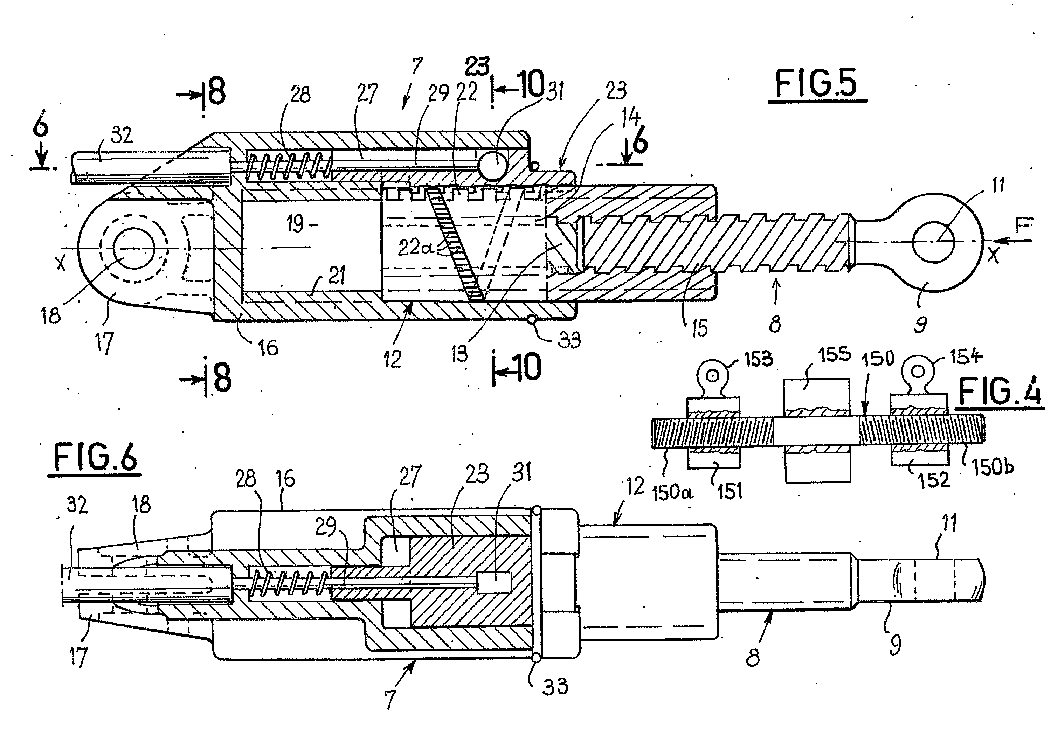

Dans le quatrième mode de réalisation illustré à la Figure 4, le dispositif de réglage comprend une vis 150 portant deux filetages 150a, 150b à pas contraires qui coopèrent chacun avec un écrou 151, 152 dont l'un est relié à la pièce fixe et l'autre à la pièce mobile à régler, par des oeillets respectifs 153, 154. La vis 150 traverse un boîtier 155 pouvant être muni de moyens de verrouillage de la vis 150. Un effort exercé parallèlement à l'axe de la vis 150 sur l'écrou (153 ou 154) mobile en translation, à partir de la pièce mobile, déplace la vis 150 à la fois en translation et en rotation.

Le vérin mécanique 7 des Figures 5 à 10 comprend une vis 8 dont une extrémité 9 est percée d'une boutonnière 11, de manière à pouvoir être articulée sur la pièce mobile à régler, ou sur la pièce fixe, et un écrou 12 percé d'un logement axial 13 présentant un taraudage 14 adapté pour coopérer avec le filetage 15 de la vis 8. L'écrou 12 est lui-même logé dans un boîtier ou corps 16 rendu solidaire de l'une des deux pièces fixe et mobile par une oreille terminale 17 percée d'une boutonnière 18.

Dans le boîtier 16 est ménagé un logement axial 19 recevant l'écrou 12, et la paroi du logement 19 présente un filetage 21 adapté pour coopérer avec des filets 22 complémentaires de l'écrou 12 formés extérieurement à celui-ci, de manière à permettre à l'écrou 12 de tourner à l'intérieur du boîtier 16 autour de l'axe général X–X du vérin mécanique 7, dans des conditions qui seront précisées ci-après. Dans l'exemple décrit, les filets 22 sont au nombre de trois.

D'autre part, le dispositif 7 est équipé de moyens de verrouillage et de déverrouillage de l'écrou 12 conformes à l'invention, permettant de bloquer celui-ci en rotation ainsi que la vis 8 en translation, ou au contraire de libérer l'écrou 12 en rotation et ainsi permettre un déplacement en translation axiale de la vis 8 à l'intérieur de l'écrou 12. En effet, la vis 8 étant articulée par son extrémité 9 sur une pièce mobile ou fixe, ne peut tourner autour de son axe X–X, de sorte que, lorsque cette vis 8 est soumise à une poussée axiale F, elle ne peut se déplacer en translation axiale dans l'écrou 12 que si ce dernier est libre en rotation.

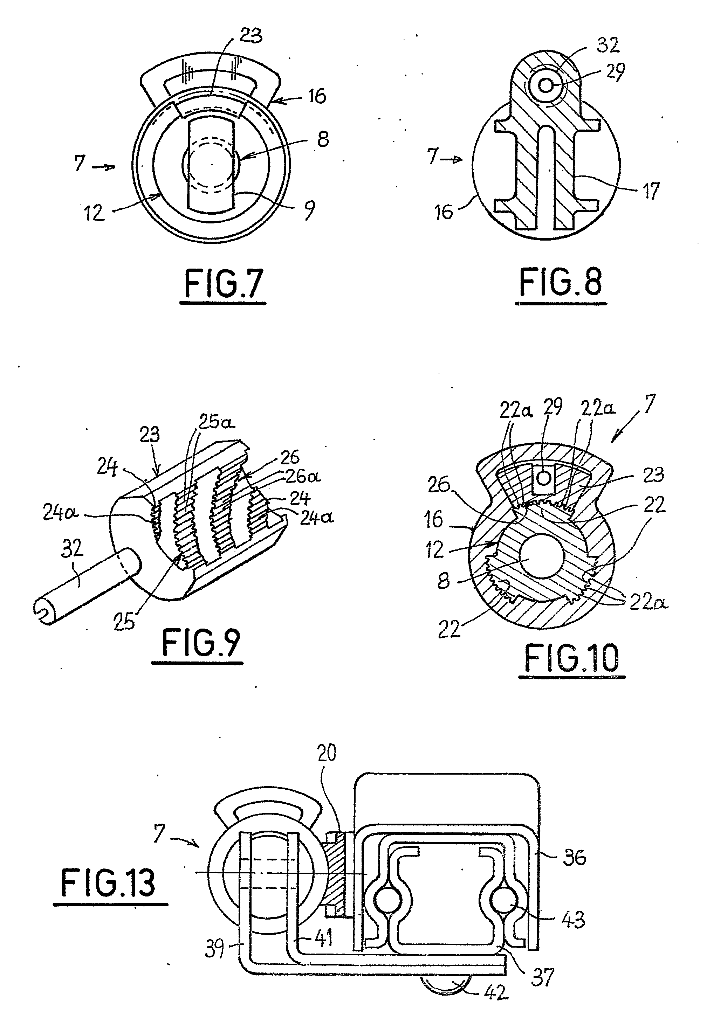

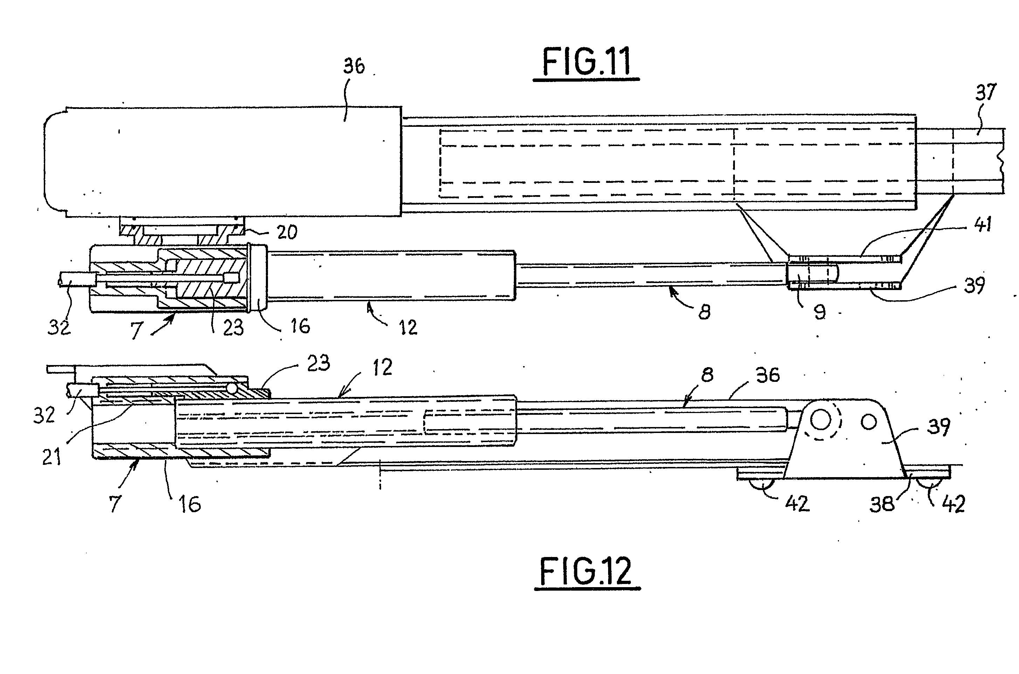

Dans l'exemple décrit, des moyens de verrouillage de l'écrou 12 comprennent: une portion de cylindre verrouilleur 23 pourvue de filets intérieurs 24, 25, 26 conjugués des filets 22 de l'écrou 12 (donc également au nombre de 3 dans cet exemple), et dans ces deux séries de filets 22–26 sont réalisées des cannelures respectives 22a; 24a, 25a, 26a complémentaires, parallèles à l'axe X–X. Le cylindre verrouilleur 23 est logé dans un compartiment longitudinal 27 du boîtier 16, s'étendant parallèlement au logement 19. D'autre part, le filetage intérieur 21 est interrompu sur un secteur angulaire égal à celui occupé par la portion de cylindre verrouilleur 23, comme on le voit à la Figure 10. De ce fait, si le cylindre verrouilleur 23 se trouve dans une position axiale telle que ses filets 24–26 sont dans le prolongement radial des filets du filetage 21, les filet 24–26 forment avec ceux-ci un filetage unique. Ceci autorise donc la rotation de l'écrou 12 ainsi que son déplacement axial dans le boîtier 16 par coopération de ses filets 22 avec le filetage 21 mis en phase avec les filets 24–26.

Le verrouilleur 23 est sollicité par un organe élastique 28, constitué par un ressort hélicoïdal coaxial à un câble 29 dont une extrémité est rendue solidaire du verrouilleur 23 par un arrêt 31 disposé dans un évidement correspondant du verrouilleur 23. Le câble 29 s'étend ainsi dans le compartiment 27 et traverse le corps 16 à l'extérieur duquel il est enveloppé dans une gaine 32. Le câble 29 est muni à son extrémité opposée à l'arrêt 31 d'un élément de commande (non représenté), par exemple une poignée manuelle. Le ressort 28 prend appui sur un fond du compartiment 27 et exerce sur une extrémité du verrouilleur 23 une poussée sensiblement parallèle à l'axe X–X, qui tend à maintenir le verrouilleur 23 en butée axiale contre un moyen de retenue tel qu'un jonc 33 partiellement logé dans une gorge correspondante de la périphérie du boîtier 16.

Le logement 27 est dimensionné de manière à autoriser des déplacements axiaux alternés du verrouilleur 23 et à guider par ses parois ces déplacements (Figure 6).

Le fonctionnement du dispositif de réglage 7 est le suivant:

La vis 8 étant articulée par son extrémité 9 sur une pièce mobile à régler et le boîtier 16 étant articulé par son extrémité 17 sur une pièce fixe par rapport à la pièce mobile (ou inversement), et le vérin 7 étant au repos, la poussée du ressort 28 sur le verrouilleur 23 maintient celui-ci en butée contre le jonc 33, dans une position axiale où ses filets 24–26 sont décalés par rapport au filetage 21, d'$\frac{1}{6}$ du pas total des filets de ce filetage. De ce fait, les filets 24–26 sont en prise avec les filets 22 par emboîtement de leurs cannelures complémentaires 22a et 24a–26a respectives. Ainsi, l'écrou 12 est verrouillé en rotation dans le boîtier 16, et une poussée axiale F exercée sur la vis 8 ne permet pas à celle-ci d'exécuter une translation axiale dans l'écrou 12, la vis 8 restant donc immobilisée.

Si maintenant on veut régler la position de la pièce mobile sur laquelle est articulée la vis 8 (ou le corps 16), on exerce sur le câble 29 une traction à l'encontre de la force de rappel du ressort 28. Cette traction est transmise par l'arrêt 31 au verrouilleur 23 qui recule dans son compartiment 27, de sorte que les filets 24–26 et leurs cannelures 24a–26a se dégagent des filets 22. Au terme de ce retrait axial du verrouilleur 23, les filets 24–26 viennent se placer dans le prolongement radial des filets du filetage 21 qu'ils complètent pour former un filetage unique, permettant à l'écrou 12 de tourner librement dans le boîtier 16. Ainsi, après déverrouillage de l'écrou 12, une poussée axiale F sur la vis 8 se traduit par un double mouvement: la vis 8 provoque la rotation de l'écrou 12 à l'intérieur duquel elle s'enfonce par coopération des filetages 14 et 15, et l'écrou 12 exécute une translation axiale dans le boîtier 16 à l'intérieur duquel il s'enfonce.

Bien entendu, si une poussée axiale opposée à la poussée F est exercée sur la vis 8, cela provoque les mouvements relatifs inverses des précédents des pièces 8 et 12. Lorsque la pièce mobile a atteint la position désirée, on relâche le câble de commande 29, de sorte que le ressort 28 rappelle le verrouilleur 23 dans sa position initiale. Ses filets 24–26 viennent ainsi à nouveau en prise avec les filets 22 par emboîtement des cannelures 22a et 24a–26a, ce qui bloque à nouveau l'écrou 12 en rotation et la vis 8 en translation.

Les déplacements axiaux du verrouilleur 23 sont guidés par les parois longitudinales du logement 27 (Figure 10) et de même les déplacements du câble 29 sont guidés par un logement correspondant sur la surface du verrouilleur 23.

Les Figures 11 à 13 illustrent l'implantation d'un dispositif de réglage 7, conforme au mode de réalisation des Figures 5 à 10, par une attache 20 sur une glissière 36 pouvant coulisser sur une glissière 37 fixée à un plancher, par exemple de véhicule, pour le réglage de la position longitudinale de l'assise (non représentée) du siège, le vérin 7 étant positionné à l'avant du siège. La vis 8 est représentée dans sa position de sortie maximum de l'écrou 12, lui-même dans sa position de sortie maximum du boîtier 16. L'extrémité 9 de cette vis est articulée sur deux cornières 39, 41 solidarisées avec la glissière fixe 37, par exemple par des rivets 42. Des billes de roulement 43 sont classiquement interposées entre les glissières 36 et 37.

**Revendications**

1. Système de verrouillage d'un dispositif linéaire (7) de réglage rapide et de blocage d'une pièce mobile par rapport à une pièce fixe, ce dispositif linéaire comprenant au moins un couple d'éléments vis-écrou (8, 12) portés par un boîtier (16) coopérant avec les deux pièces fixe et mobile et dont l'angle de vis est suffisamment élevé pour que le rendement de la translation vers la rotation soit légèrement positif, ledit système étant agencé pour pouvoir verrouiller l'élément rotatif (12) du couple vis-écrou après réglage de la position de la pièce mobile, caractérisé en ce que les moyens de verrouillage de l'écrou (12) comprennent: une portion de cylindre verrouilleur (23) pourvue de filets intérieurs (24–26) conjugués de filets extérieurs (22) de l'écrou, et dans ces deux séries de filets sont réalisées des cannelures complémentaires (24a–26a) parallèles à l'axe (X–X) de la vis (8), la portion de cylindre verrouilleur (23) étant sollicitée par un organe élastique (28) contre une butée (33) solidaire du boîtier (16) et en prise avec les cannelures (22a) de l'écrou (12) en bloquant celui-ci en rotation, le dispositif (7) étant alors au repos, un filetage (21) étant formé dans le boîtier et similaire aux filets extérieurs (22) de l'écrou, de manière que l'écrou (12) puisse tourner dans le filetage (21) du boîtier en se déplaçant axialement dans celui-ci et dans les filets (24–26) du verrouilleur (23), lorsque le cylindre verrouilleur (23) n'est pas en prise avec l'écrou, et des moyens de commande manuelle permettant de déplacer axialement le cylindre verrouilleur (23) pour le dégager des cannelures (22a) de l'écrou (12) et déverrouiller ce dernier en rotation afin de lui permettre de tourner dans le filetage (21) du boîtier.

2. Dispositif selon la revendication 1, caractérisé en ce que le verrouilleur (23) étant disposé dans un compartiment (27) du boîtier (16) dont les parois guident axialement le verrouilleur (23), les moyens de commande du verrouilleur comprennent un câble (29) dont une extrémité est solidaire du verrouilleur (23) et qui s'étend parallèlement à l'axe (X–X) de l'écrou (12) et de la vis (8), et ledit organe élastique de verrouillage est un ressort hélicoïdal (28) coaxial au câble (29), prenant appui sur une extrémité du compartiment (27) du boîtier et exerçant sur le verrouilleur (23) une poussée le maintenant en prise avec les cannelures axiales (22a) des filets extérieurs (22) de l'écrou (12) tant qu'une traction suffisante de sens opposé à cette poussée n'est pas exercée sur le câble.

3. Dispositif selon la revendication 2, caractérisé en ce que le filetage (21) du boîtier (12) est interrompu sur un secteur angulaire égal à celui occupé par le cylindre verrouilleur (23), de telle sorte que les filets (24–26) de celui-ci puissent venir se placer en phase avec le filetage (21) du boîtier lorsque le cylindre verrouilleur (23) est en position de déverrouillage de l'écrou (12), qui peut alors tourner librement dans son logement délimité par le boîtier (16) et par le cylindre verrouilleur (23).

## Claims

1. A locking system for a linear device (7) for quickly adjusting and immobilizing a movable part in relation to a fixed part, the linear device comprising at least a pair of screw-and-nut elements (8, 12) borne by a casing (16) cooperating with the fixed and movable parts, the helical angles of the screw being large enough to ensure that the performance of the translation into rotation is slightly positive, the system being adapted to lock the rotary element (12) of the pair of screw-and-nut elements after adjustment of the position of the movable part, characterized in that the locking means for the nut (12) comprise: a locking cylinder portion (23) formed with internal screwthreadings (24–26) conjugate with external screwthreadings (22) on the nut, and provided in the two series of screwthreadings are complementary splines (24–26a) which are parallel with the axis (X–X) of the screw (8), the portion of the locking cylinder (23) being biased by a resilient member (28) against an abutment (33) integral with the casing (16) and engaging with the splines (22a) of the nut (12), locking said nut against rotation, the device (7) then being at rest, the casing being formed with a screwthreading (21) similar to the external screwthreadings (22) of the nut, so that the nut (12) can rotate in the screwthreading (21) of the casing and travel axially therein and in the screwthreadings (24–26) of the locking member (23) when the locking cylinder (23) does not engage with the nut, and manual control means allowing the axial displacement of the locking cylinder (23) to disengage said cylinder from the splines (22a) of the nut (12) and unlock the nut in rotation, to enable the nut to rotate in the screwthreading (21) of the casing.

2. A device according to claim 1, characterized in that the locking member (23) being disposed in a compartment (27) of the casing (16) whose walls guide the locking member (23) axially, the means for controlling the locking member comprise a cable (29) having an end integral with the locking member (23) and extending parallel with the axis (X–X) of the nut (12) and screw (8), and said resilient locking member is a helical spring (28) coaxial with the cable (29) and bearing against one end of the compartment (27) of the casing and exerting on the locking member (23) a thrust which retains the locking member in engagement with the axial splines (22a) of the external screwthreadings (22) of the nut (12), so long as a sufficient pull in a direction opposed to said thrust is not exerted on the cable.

3. A device according to claim 2, characterized in that the screwthreading (21) of the casing (12) is interrupted in an angular sector equal to the angular sector occupied by the locking cylinder (23), so that the screwthreadings (24–26) of the locking cylinder can be placed in phase with the screwthreading (21) of the casing when the locking cylinder (23) is in the position for unlocking the nut (12), which can then rotate freely in its cavity bound by the casing (16) and the locking cylinder (23).

## Patentansprüche

1. Verriegelungssystem für eine lineare Vorrichtung (7) zur Schnellverstellung und Blockierung eines beweglichen Teils gegenüber einem feststehenden Teil, wobei die lineare Vorrichtung mindestens ein Schrauben-Mutter-Paar (8, 12) besitzt, das von einem Gehäuse (16) getragen ist, das mit dem feststehenden und dem beweglichen Teil zusammenwirkt, und dessen Steigungswinkel so groß ist, daß der Wirkungsgrad von der geradlinigen Bewegung zu der Drehung etwas positiv ist, und das System so ausgebildet ist, daß es das drehbare Element (12) des Schrauben-Mutter-Paars nach Einstellung der Stellung des beweglichen Teils verriegeln kann, dadurch gekennzeichnet, daß die Einrichtungen zur Verriegelung der Mutter (12) folgende Teile aufweisen: einen Verriegelungszylinderabschnitt (23) mit Innengewindegängen (24–26), die Außengewindegängen (22) der Mutter zugeordnet sind, wobei in diesen beiden Serien von Gewindegängen einander ergänzende und zur Achse (X–X) der Schraube (8) parallele Rillen (24a–26a) vorgesehen sind und der Verriegelungszylinderabschnitt (23) durch ein elastisches Organ (28) in Richtung auf einen mit dem Gehäuse (16) fest verbundenen Anschlag (33) beaufschlagt ist und in der Ruhestellung der Vorrichtung (7) mit den Rillen (22a) der Mutter (12) in Eingriff ist und diese bezüglich Drehung blockiert, ein in dem Gehäuse vorgesehenes Gewinde (21), das wie die Außengewindegänge (22) der Mutter ausgebildet ist, so daß sich die Mutter (12) in dem Gewinde (21) des Gehäuses drehen kann, indem sie sich axial in diesem und in den Gewindegängen (24–26) des Verriegelungszylinderabschnitts (23) bewegt, wenn dieser nicht mit der Mutter in Eingriff ist, und Handbetätigungseinrichtungen, die eine axiale Bewegung des Verriegelungszylinders (23) gestatten, wodurch dieser aus den Rillen (22a) der Mutter (12) ausgerückt wird und die Mutter bezüglich Drehung entriegelt wird, so daß sie sich in dem Gewinde (21) des Gehäuses drehen kann.

2. Vorrichtung nach Anspruch 1, dadurch gekennzeichnet, daß im Fall eines Verriegelungszylinderabschnitts (23), der in einer Kammer (27) des Gehäuses (16) angeordnet ist, deren Wände den Verriegelungszylinderabschnitt (23) axial führen, die Einrichtungen zur Betätigung des Verriegelungszylinderabschnitts aus einem Seil (29) bestehen, das mit einem Ende an dem Verriegelungszylinderabschnitt (23) befestigt ist und das sich parallel zur Achse (X–X) der Mutter (12) und der Schraube (8) erstreckt, und das elastische Verriegelungsorgan eine zum Seil (29) koaxiale Schraubenfeder (28) ist, die sich an einem Ende der Kammer (27) des Gehäuses abstützt und auf den Verriegelungszylinderabschnitt (23) einen Schub ausübt, durch den dieser mit den axialen Rillen (22a) der Außengewindegänge (22) der Mutter (12) in Eingriff gehalten wird, solange auf das Seil keine ausreichend große, diesem Schub entgegengesetzte Zugkraft ausgeübt wird.

3. Vorrichtung nach Anspruch 2, dadurch gekennzeichnet, daß das Gewinde (21) des Gehäuses (16) auf einem Winkelsektor unterbrochen ist, der gleich dem von dem Verriegelungszylinderabschnitt (23) eingenommenen Winkelsektor ist, so daß dessen Gewindegänge (24–26) mit dem Gewinde (21) des Gehäuses in Phase kommen können, wenn der Verriegelungszylinderabschnitt (23) in der Stellung der Entriegelung der Mutter (12) ist, die sich nun in ihrer von dem Gehäuse (16) und dem Verriegelungszylinderabschnitt (23) abgegrenzten Bohrung frei drehen kann.

## FIG.1

## FIG.2

## FIG.3

FIG.5

FIG.4

FIG.6

EP 0 265 316 B1

**FIG.7**

**FIG.8**

**FIG.9**

**FIG.10**

**FIG.13**

## FIG.11

## FIG.12

EP 0 265 316 B1